# EUROPEAN PATENT APPLICATION

(11) **EP 1 271 913 A1**
(43) Date of publication of application: **02.01.2003**
(21) Application number: 02254471.2
(22) Date of filing: 26.06.2002
(51) Int. Cl.: H04M 19/04

(54) **Triggering a mobile phone feature upon receipt of one or more inputs relating to phone numbers grouped according to a shared characteristic**

(30) Priority: 28.06.2001 US 894737
(71) Applicant: Nokia Corporation, 02150 Espoo (FI)
(72) Inventor: Ranta, Jukka, 20300 Turku (FI); Selin, Jari, 00180 Helsinki (FI)
(74) Representative: Style, Kelda Camilla Karen

(57) **Abstract**

A distinctive profile is created associating selected phone numbers having a shared characteristic and enabling a feature of a mobile telephone for operation upon receiving an input relating to one of the selected phone numbers. For instance, phone numbers of recently made, received or missed phone calls are stored (16) in a memory of a mobile telephone and associated with a distinctive alerting sound. An incoming call matching (34) one of the stored phone numbers causes the distinctive alerting sound to be sounded unless the phone number matches (26) a number prestored by the user and associated with an individual or organization known to the user. A further embodiment allows a user to establish a profile of a set of numbers having a common part and permitting the user to add phone numbers to the set without having to wholly enter the common part.

## Description

The present invention relates to mobile telephones and, more particularly, grouping selected phone numbers stored in a mobile phone in order to trigger a feature of the mobile phone in response to an input relating to one of the selected phone numbers.

Alerting tones are nowadays one of the most popular features of the mobile phone. Different alerting tones are associated with different individuals or parties and are advantageous because the user has an idea of the caller already before seeing the display of the phone. The user can prepare in a suitable way to answering the phone immediately when it starts ringing. The knowledge of the source of the call has become of the utmost importance to these customers.

Furthermore, it is now commonplace for mobile telephones to provide user-adjustable operating characteristics such as the volume of an output signal, the ringing volume, and the generation of tone sequences that change depending on the user's present environment. For instance, U.S. Pat. No. 5,479,476 shows a mobile telephone having the capability to define a plurality of groups, each of which includes a plurality of user-adjustable characteristics. Values for individual characteristics may be input and one of the defined groups selected for use in controlling an operation of the mobile telephone, at least partially in accordance with the inputted values of the selected one of the groups. For instance, the characteristics might include sound volume, ringing tone, key tones, warning tones, lights, call transfer, etc. The different groups may constitute "ambient conditions", such as indoors, outdoors, conference/theater, car, personal, etc. Each group has the individual characteristics set appropriately for the given ambient condition. For instance, the ringing tone may be made silent upon selecting the conference/theater group, and the key tones may be set "off" as well.

Likewise, a phone number can be grouped with other telephone numbers in a category defined by a personal communication service (PCS) provider. For instance, U.S. Pat. No. 5,329,578 permits incoming call management by grouping those callers who should receive a "Special Callers List" feature such as forced urgency, call announcing, or call blocking treatment. Such a grouping can be done by a CLID (Calling Line Identification) feature.

There is a category or group of phone calls which is the recently-received phone calls which a user would not normally be inclined to include in any such groupings for future reference, because calls to or from these numbers are of a temporary nature, not needing group management, and not likely to be frequently called in the long-term.

It would be nonetheless desirable for the user to be able to distinguish calls from totally unknown sources from calls that have been used recently, but have not been grouped for alerting with distinctive characteristics.

Calling profiles are today created by the user entering the whole number of the phone number to be added to the profile. If the user wants to attach a set of numbers beginning with or ending with the same numbers to a profile, each of these numbers must be entered separately. For example, a company might have all its numbers beginning with 12345. An extension is selected by adding, for example, two numbers to this base number. If a user wants to attach all calls from this company to a profile, dozens or maybe even hundreds of numbers would have to be entered. This requires a lot of work on the part of the user and this is a problem.

An object of the present invention is to provide for triggering a mobile phone feature upon receipt of one or more inputs relating to phone numbers grouped according to a shared characteristic.

Another object of the present invention is to alert the mobile device user that an incoming call is from a group comprising recently made, received or missed calls.

Yet another object of the present invention is to permit a user to associate telephone numbers sharing a common part into a single profile without having to enter the whole number of each telephone number.

According to a first aspect of the present invention, a method for use in a mobile telephone having means for storing phone numbers in a memory comprises the steps of associating selected phone numbers with a distinctive profile generally indicative of a shared characteristic of the selected phone numbers, and enabling a feature of the mobile telephone for operation upon receiving an input relating to one of the selected phone numbers. The shared characteristic may be of a temporal or numerical nature. The feature enabled by the received input may consist of an input/output feature of the mobile telephone.

According further to the first aspect of the present invention, the shared characteristic comprises recently made or received phone calls and the feature comprises a distinctive alerting sound indicative of the shared characteristic, the input comprising receipt of a call from one of the phone numbers of recently made or received calls. By recently is meant a time period selected by default or by user selection starting at a first selected point in time ending at a second selected point in time, which second time may comprise the time presently being experienced by the user and the first time may comprise a selected time before the second time. It can also be defined by a flexible measure of time such as phone numbers associated with a certain number of incoming calls. Such might for instance be a certain number of the latest inputs such as the most recent ten incoming phone calls. The time period over which these ten calls are received is of course not fixed but may nonetheless be defined as the ten most "recent" calls. The meaning of "recent" in this case is therefore flexible with the time period defined corresponding to the total period over which calls are received and having numbers which may be stored according to some memory management task.

The association or enablement may be prevented in a case where the call received is from one of the phone numbers of recently made or received calls that matches a phone number prestored already in memory by a user. A distinctive alerting sound may be utilized so as to be indicative of a particular party associated with the phone number prestored in the memory by the user.
In further accord with the first aspect of the present invention, the profile is instead indicative of a particular party having an associated phone number selected and prestored in the memory by a user of the mobile telephone.

In still further accord with the first aspect of the present invention, the profile is separately generally indicative of recently made, received or missed calls with recently made calls, recently received calls, and recently missed calls having profiles distinct from each other.

Still further in accord with the first aspect of the present invention, the shared characteristic comprises the selected phone numbers having some shared numbers, the input comprising a user entering the phone numbers into the memory, and the feature comprising allowing the user to enter the phone numbers without having to enter the shared numbers.

According to a second aspect of the invention, a method for use in a mobile telephone having means for storing phone numbers of recently made or received phone calls, wherein said mobile telephone stores said phone numbers of recently made or received phone calls in a memory having capacity dedicated for only a limited number of phone numbers of said recently made or received phone calls which are removed one or more at a time according to a selected capacity management methodology, said method comprises the steps of associating said stored phone numbers of recently made or received phone calls with a distinctive alerting sound generally indicative of recently made or received phone calls, and sounding said distinctive alerting sound upon receiving a call from one of said phone numbers of recently made or received calls.

Further according to the second aspect of the invention, the method further comprises the step of preventing said step of associating or sounding in a case where said call received from one of said phone numbers of recently made or received calls matches a phone number prestored in said memory by a user.

Still further according to the second aspect of the invention, the method further comprises the step of sounding a distinctive alerting sound indicative of a particular party associated with said phone number prestored in said memory by said user.

Further still according to the second aspect of the invention, the distinctive alerting sound is instead indicative of a particular party having an associated phone number selected and prestored in said memory by a user of said mobile telephone.

In further accord with the second aspect of the invention, the distinctive alerting sound is separately generally indicative of recently made, received or missed calls with recently made calls, recently received calls, and recently missed calls having alerting sounds distinct from each other.

According to a third aspect of the invention, a method for use in a mobile telephone that stores phone numbers of recently made or received phone calls in a memory having capacity dedicated for only a limited number of phone numbers which are removed one or more at a time according to a selected capacity management process, said method comprises the steps of comparing a phone number of an incoming phone call to said recently made or received phone numbers stored in said memory and upon finding a match, sounding a distinctive alerting sound.

Further according to the third aspect of the invention, the mobile telephone also stores phone numbers entered by a user, wherein said method further comprises the step of comparing said phone number of said incoming phone call to said stored phone numbers entered by said user and only sounding said distinctive alerting sound in the absence of a match.

Still further according to the third aspect of the invention, the distinctive alerting sound for recently made calls is distinct from recently received calls.

According to a fourth aspect of the invention, a method for use in a mobile telephone having means for storing phone numbers of recently made, received, or missed calls, wherein said mobile telephone stores said phone numbers of recently made, received, or missed calls in a memory having capacity dedicated for only a limited number of phone numbers of said recently made, received, or missed calls that are removed one or more at a time according to a memory management technique, said method comprises the steps of comparing a phone number of an incoming phone call to said phone numbers of recently made, received, or missed calls stored in said memory and also to phone numbers stored by a user, and sounding a distinctive alerting sound generally indicative of recently made, received or missed calls upon said step of comparing yielding a match between said phone number of said incoming phone call and a phone number of a recently made, received, or missed call stored in said memory except upon said step of comparing also yielding a match between said phone number of said incoming phone call and a phone number stored by the user, in which case said distinctive alerting sound is indicative of a particular party having said phone number stored by the user.

Further according to the fourth aspect of the invention, the distinctive alerting sound is separately generally indicative of recently made, received or missed calls with recently made calls, recently received calls, and recently missed calls having alerting sounds distinct from each other.

According to a fifth aspect of the invention, a method for use in a mobile telephone having phone numbers stored by a user in groups in a memory with separate sequences of alerting tones associated by the user with each group, comprises the steps of defining a new group for storing a selected number of phone numbers of most recently made or received phone calls in a portion of said memory or in a separate memory having a storage capacity limited by a memory management process to storing a maximum of said selected number of phone numbers, and alerting the user to a received phone call from a phone number presently stored in said portion of said memory or in said separate memory with a distinctive sequence of alerting tones associated with said new group.

Further according to the fifth aspect of the invention, the step of alerting the user to a received phone call is made with a distinctive sequence of alerting tones associated with a group associated with a phone number already stored in said mobile telephone by said user and associated with said group rather than said new group.

Further still according to the fifth aspect of the invention, the new group also includes phone numbers of most recently missed phone calls.

According to a sixth aspect of the invention, a mobile telephone having means for storing phone numbers of recently made or received phone calls, wherein said mobile telephone stores said phone numbers of recently made or received phone calls in a memory having capacity dedicated for only a limited number of phone numbers of said recently made or received phone calls which are removed one or more at a time according to a selected capacity management methodology, said mobile telephone further comprises means for associating said stored phone numbers of recently made or received phone calls with a distinctive alerting sound generally indicative of recently made or received phone calls, and means for sounding said distinctive alerting sound upon receiving a call from one of said phone numbers of recently made or received calls.

Further according to the sixth aspect of the invention, a mobile telephone further comprises means for preventing said step of associating or sounding in a case where said call received from one of said phone numbers of recently made or received calls matches a phone number prestored in said memory by a user.

Further still according to the sixth aspect of the invention, the mobile telephone further comprises means for sounding a distinctive alerting sound indicative of a particular party associated with said phone number prestored in said memory by said user.

Still further according to the sixth aspect of the invention, the distinctive alerting sound is instead indicative of a particular party having an associated phone number selected and prestored in said memory by a user of said mobile telephone.

Further still according to the sixth aspect of the invention, the distinctive alerting sound is separately generally indicative of recently made, received or missed calls with recently made calls, recently received calls, and recently missed calls having alerting sounds distinct from each other.

According to a seventh aspect of the invention, a mobile telephone that stores phone numbers of recently made or received phone calls in a memory having capacity dedicated for only a limited number of phone numbers which are removed one or more at a time according to a selected capacity management process further comprises means for comparing a phone number of an incoming phone call to said recently made or received phone numbers stored in said memory, and means for sounding a distinctive alerting sound upon finding a match.

Further according to the seventh aspect of the invention, the mobile telephone also stores phone numbers entered by a user, wherein said method further comprises means for comparing said phone number of said incoming phone call to said stored phone numbers entered by said user and only sounding said distinctive alerting sound in the absence of a match.

Further still according to the seventh aspect of the invention, the distinctive alerting sound for recently made calls is distinct from that for recently received calls.

According to an eighth aspect of the invention, a mobile telephone having means for storing phone numbers of recently made, received, or missed calls, wherein said mobile telephone stores said phone numbers of recently made, received, or missed calls in a memory having capacity dedicated for only a limited number of phone numbers of said recently made, received, or missed calls that are removed one or more at a time according to a memory management technique, said mobile telephone comprises means for comparing a phone number of an incoming phone call to said phone numbers of recently made, received, or missed calls stored in said memory and also to phone numbers stored by a user, and means for sounding a distinctive alerting sound generally indicative of recently made, received or missed calls upon said means for comparing yielding a match between said phone number of said incoming phone call and a phone number of a recently made, received, or missed call stored in said memory except upon said means for comparing also yielding a match between said phone number of said incoming phone call and a phone number stored by the user, in which case said distinctive alerting sound is indicative of a particular party having said phone number stored by the user.

Further according to the eighth aspect of the invention, the distinctive alerting sound is separately generally indicative of recently made, received or missed calls with recently made calls, recently received calls, and recently missed calls having alerting sounds distinct from each other.

According to a ninth aspect of the invention, a mobile telephone having phone numbers stored by a user in groups in a memory with separate sequences of alerting tones associated by the user with each group, comprises means for defining a new group for storing a selected number of phone numbers of most recently made or received phone calls in a portion of said memory or in a separate memory having a storage capacity limited by a memory management process to storing a maximum of said selected number of phone numbers, and means for alerting the user to a received phone call from a phone number presently stored in said portion of said memory or in said separate memory with a distinctive sequence of alerting tones associated with said new group.

Further according to the ninth aspect of the invention, the means for alerting the user to a received phone call provides a distinctive sequence of alerting tones associated with a group associated with a phone number already stored in said mobile telephone by said user and associated with said group rather than said new group.

Further still according to the ninth aspect of the invention, the new group also includes phone numbers of most recently missed phone calls.

According to a tenth aspect of the invention, a method for use in a telecommunications terminal comprising the steps of receiving a user input associating a common part of a set of phone numbers with a distinctive profile, and permitting the user to add phone numbers to said set of phone numbers without wholly entering the common part.

In further accord with the tenth aspect of the invention, the input associating a common part comprises entering said common part with one or more additional symbols indicating additional user input is required to add a noncommon part corresponding to said one or more additional symbols in adding numbers to said set.

In still further accord with the tenth aspect of the invention, the user adds a number to the set of numbers with a distinctive profile by operating the distinctive profile and adding digits to the common part to designate a distinctive phone number.

The invention enhances the versatility of mobile phones by permitting the triggering of a mobile phone feature upon receipt of one or more inputs relating to phone numbers grouped according to a shared characteristic which may consist of a numerical characteristic or a temporal characteristic. Furthermore the feature may consist of an input/output feature.

This invention further enhances the versatility of the alerting tones and their association to the telephone numbers. The user can define separate alerting tones for the telephone numbers of recently called, received, or missed calls which are not stored in the permanent short code memory (SCM) of the phone. With this feature the user can distinguish the calls coming from totally unknown sources from the ones that have been used recently, but are of a temporary nature. These would typically be the numbers of offices, shops, hospitals, etc., where the user could make or from which the user would receive a few calls during a few days or a couple of weeks, but does not want to store them to the short code memory and define user groups and specific alerting tones for them, because the user does not expect to call them over the long-term future. Still, it would be helpful if calls coming from these recently frequently-used numbers could be distinguished from the other calls by a distinctive alerting sound.

Finally, the invention permits the user to only have to enter one entry for a set of numbers sharing a common part. This alleviates the user having to attach a call from for instance a company profile without having to enter the whole number and thereby avoid for instance dozens or even hundreds of numbers having to be entered by entering the whole number.

These and other objects, features and advantages of the present invention will become more apparent in light of the detailed description of a best mode embodiment thereof, as illustrated in the accompanying drawing.

Fig. 1 shows a method for use in a mobile telephone to associate selected phone numbers with a distinctive profile indicative of a shared characteristic of the selected phone numbers and enabling a feature of the mobile telephone for operation upon receiving an input relating to one of the selected phone numbers.

Fig. 2 shows a series of steps which may be carried out in a mobile device for storing a phone number of a recently made, received or missed call among others and associating same with a distinctive alerting sound, according to the present invention, and including performance of a memory management task designed to limit the number of such calls stored in the mobile device.

Fig. 3 shows a series of steps, according to the present invention, for sounding a distinctive alerting sound for an incoming call found to be associated to either a known party or a recently made, received or missed call.

Fig. 4 shows a mobile device capable of carrying out the steps shown in Figs. 2 and 3, according to the present invention.

Fig. 5 shows a method for use in a telecommunications terminal for receiving a user input establishing a distinctive profile and permitting the user to add phone numbers to the profile without having to enter a common part of the profile in whole.

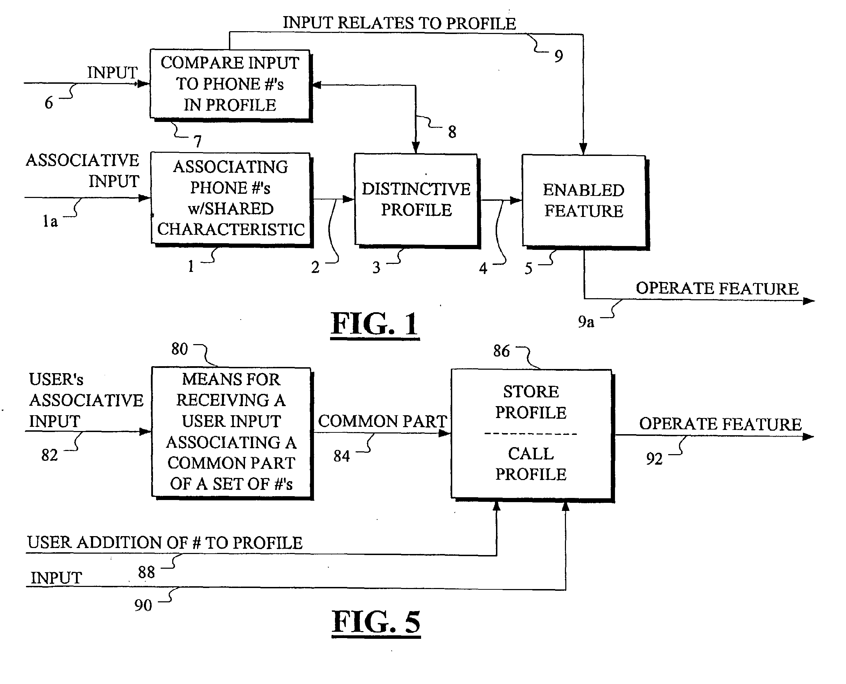

Fig. 1 shows a method and means for triggering a mobile phone feature upon receipt of one or more inputs relating to phone numbers grouped according to a shared characteristic. First of all, a user provides inputs 1a having an associative function to associate phone numbers with a shared characteristic as shown by a step or means 1. These associated phone numbers are grouped as shown by a signal on a line 2 in a step or means for creating a distinctive profile 3. Once this distinctive profile is created a feature is enabled as shown by an enabling signal on a line 4 to a means or step 5 for enabling a feature of the mobile telephone which is enabled for operation upon receiving an input relating to one of the selected phone numbers grouped within the distinctive profile. Such an input is shown by a signal on a line 6 received by a means or step 7 for comparing the input to phone numbers associated within the distinctive profile 3, as indicated by a compare signal on a line 8 between the comparison means 7 and the distinctive profile 3. If the comparison means or step 7 determines that the input signal on the line 6 is indeed related to one of the selected phone numbers, a triggering signal is provided on a line 9 to the enabled feature means or step 5 and the enabled feature becomes operative as indicated by a signal on a line 9a.

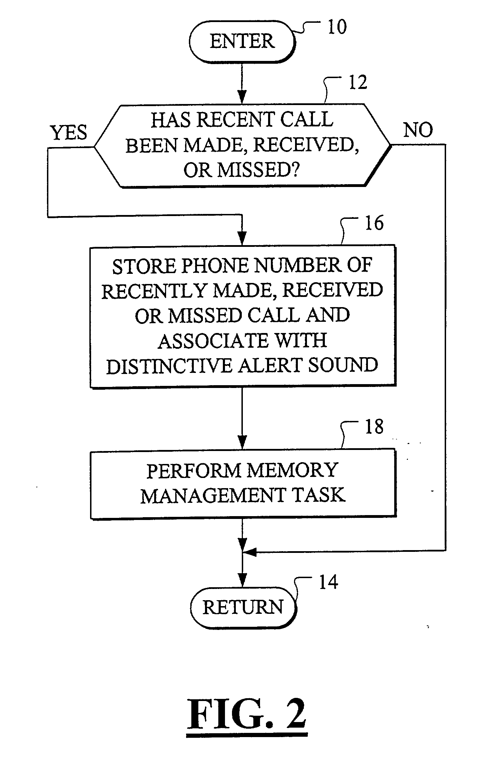

Fig. 2 shows a series of steps which may be carried out in a mobile device such as a mobile telephone for storing a phone number of a recently made, received or missed call and associating the stored number with a distinctive alerting sound. After entering in a step 10, a decision step 12 is executed to determine if a call has recently been made, received or missed. For instance, if a call has been made, received or missed since the last execution of the routine shown in Fig. 2, then it will be considered to be recent. If not, a return is made in a step 14. However, if a recent call has been made, received or missed, a step 16 is executed in order to retrieve and specially store the phone number of the recently made, received or missed call in a memory or portion of memory set aside especially for that purpose. This memory or portion of memory is managed according to a selected capacity management methodology such that it has a capacity dedicated for only a limited number of phone numbers of such recently made, received or missed phone calls. This methodology could be a method of sizing the memory to some limited size or could be a methodology such as a least-recently-used (LRU), a first-in-first-out (FIFO) methodology, or other equivalent technique. The stored phone numbers of the recently made or received phone calls are removed one or more at a time according to the selected capacity management methodology. This is indicated generally at a step 18 of Fig. 2 indicated as a step of performing a memory management task. Referring back to the step 16, in addition to storing the phone number of the recently made, received or missed call, an association is made between the stored phone numbers of recently made, received or missed phone calls with a distinctive alerting sound generally indicative of recently made, received or missed phone calls.

Once a phone number is removed by the memory management methodology, the association may be cancelled. At any given time, a limited number of phone numbers of recently made, received or missed phone calls are stored in the memory and associated with the distinctive alerting sound.

As part of the storage process of step 16, the step of associating can be prevented or omitted in a case where the call received from one of the phone numbers of recently made or received calls is found to match a phone number already stored in the memory by a user. Such might be for instance the phone number of an individual or organization known by the user and already positively associated by the user with a distinctive alerting sound for that user or organization. In that case, the storage and association of step 16 of Fig. 2 also includes a comparison step which allows the comparison of the phone number of the recently made, received or missed phone call with such phone numbers already prestored by the user.

It should be realized that the step of associating 16 can be an association of a distinctive alerting sound for one or more or for each of the different categories of recently made, received or missed calls, i.e., each having alerting sounds distinct from each other.

The term "recently" can refer to a period of time defined by a memory management task or methodology, e.g., the amount of time associated with receiving a certain number of phone numbers stored and managed in memory according to a memory management methodology such as described above. Such might include in addition to those described above, the latest phone numbers received such as numbers associated with the most recent ten incoming phone calls. The meaning of "recently" in such a context is therefore not a fixed amount of time. In addition, the term can be used to mean a fixed time period selected by default or by user selection starting at a first selected point in time and ending at a second selected point in time, wherein the second time may comprise the time presently being experienced by the user and the first time may comprise a selected time before the second time. Therefore, it will be understood that the term "recently" may be directly related to measured time, to some other parameter such as a number of calls, to a memory capacity management task or methodology, or any of the like, alone or in combination.

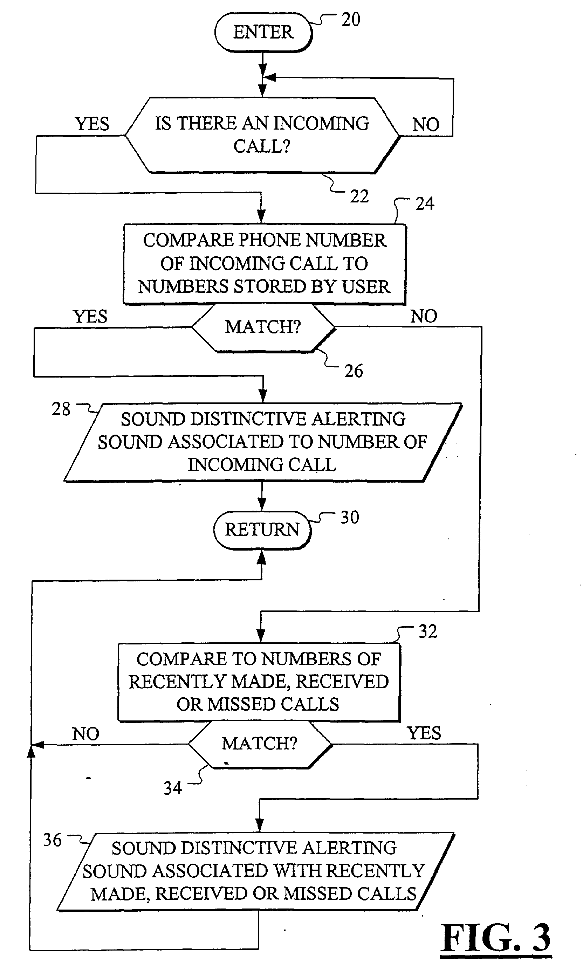

Referring now to Fig. 3, a series of steps is shown for sounding a distinctive alerting sound for an incoming call that is found to be associated with either a known party or with a recently made, received or missed call that is temporarily stored in the memory set aside for these calls. After entering in a step 20, a decision step 22 is executed to determine if there is an incoming call or not. If not, it is repeated endlessly until an incoming call is detected. It should be realized that a return could be made instead of repeating step 22 endlessly and thereafter entering at step 20 again at a selected time. In any event, assuming there is an incoming call detected, a step 24 is next executed to compare the phone number of the incoming call to numbers already stored by a user and already associated with distinctive alerting sounds for particular persons or organizations known to the user. If a match is found as determined in a step 26, a distinctive alerting sound associated to the telephone number of the incoming call is sounded as indicated in a step 28, followed by a return in a step 30.

If no match were found in the step 26, a step 32 is executed instead of step 28 in order to compare the number of the incoming phone call to numbers of recently made, received or missed calls as previously stored in the step 16 of Fig. 2. If no match is found in a step 34, then the return step 30 is executed. On the other hand, if a match is found by the step 34, then a step 36 is executed to sound a distinctive alerting sound associated with recently made, received or missed calls after which a return is made in the step 30 and the user can thereby be alerted that the incoming call is from this category of recent calls. As mentioned previously, the alerting sound can be generically associated with all three of recently made, received or missed calls, i.e., generically "recent" calls or there can be provided separate distinctive alerting sounds for each type of recently made, received or missed calls. This is controlled in the step of associating in step 16 of Fig. 2 as previously discussed. It should be mentioned that the step 16 of Fig. 2 can be viewed as a step of defining a new group for storing a selected number of phone numbers of most recently made or received phone calls in a portion of the memory or in a separate memory having a storage capacity limited by the memory management process described in connection with step 18 so as to store the selected number of phone numbers only.

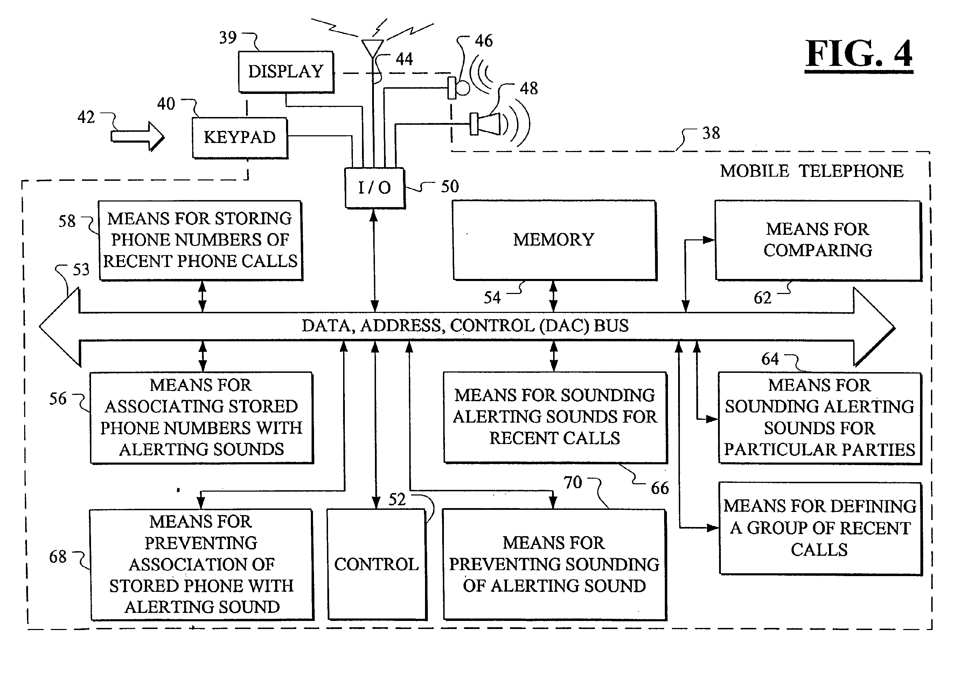

Referring now to Fig. 4, a mobile device such as a mobile telephone 38 is shown capable of carrying out the step shown in Figs. 2 and 3 according to the present invention. Such a mobile telephone includes a display 39, a keypad 40 for receiving keypad depressions 42 from a user as well as an antenna 44, a microphone 46 and a speaker 48. These are all shown connected to an input/output (I/O) device 50 which communicates with a control 52 over a data, address and control (DAC) bus 53 that interconnects various other functional blocks shown in the figure for carrying out the present invention. It would be realized that although separate functional blocks are shown, typically these functions would be embodied in a special purpose chip or software and coded for execution in such a way as to carry out the steps of Figs. 1 and 2 using a general purpose computer, a special purpose computer, microcontroller or the like.

A memory 54 is shown in Fig. 4 for storing phone numbers of recently made, received or missed phone calls. The memory has a capacity dedicated for only a limited number of such phone numbers. These are removed one or more at a time according to a selected capacity management methodology. Also included in the mobile telephone 38 is a means 56 for associating the stored phone numbers of recently made, received or missed phone calls with a distinctive alerting sound generally indicative of such phone calls. The means 56 corresponds to the step 16 of associating shown in Fig. 2. Also associated with the step 16 of Fig. 1 is a means 58 for storing phone numbers of recently made, received or missed phone calls. The memory management task 18 of Fig. 2 can be performed by the control means 52 according for instance to a FIFO technique applied to the memory 54.

A means for comparing 62 is provided for carrying out the step 24 of Fig. 3 and/or the step 32. The means 62 also carries out the decision steps 26, 34. If the first comparison step 24 of Fig. 3 is found by the means 62 to be a match, the distinctive alerting sound indicated by the step 28 is sounded by a means 64 for sounding alerting sounds associated with particular individuals or parties that have been prestored and associated by the user. On the other hand, if the steps 32, 34 result in a match, the step 36 is executed by means for sounding a distinctive alerting sound associated with recently made, received or missed calls whether it be a generic sound or individual sounds associated with each type of recent call.

As mentioned previously, the step 16 of Fig. 2 can include a step such as the steps 24, 26 of Fig. 3 so as to prevent the association of the phone number of the incoming call with the distinctive alerting sound reserved for recently made, received or missed calls. Such a functional block 68 is shown in Fig. 4. Or, a means 70 can be provided for simply preventing the sounding of the alerting sound in case of a match with a number prestored by the user and allowing the sounding of an alerting sound associated with a person or organization known to the user.

Fig. 5 shows a telecommunications terminal having means 80 for receiving a user input associating a common part of a set of phone numbers with a distinctive profile. The user utilizes a preestablished procedure for establishing a distinctive profile for a set of numbers with a shared characteristic such as a common part of the phone number. For instance, if all numbers for a particular company begin with the digits 12345 the user's associative input on the line 82 would be to enter the common part along with one or more wild card symbols such as asterisks or question marks to indicate that further user input is needed to add a particular phone number to numbers stored in association with this distinctive profile, e.g., 12345?? meaning any two digits are following the common part 12345. The wild card symbols may be placed after the common part, before, inside, or any combination thereof. For instance, *912345* would associate the common part 912345 to a distinctive profile for a set of phone numbers that have any number of digits followed by that common part 912345 followed by any number of digits. Once the association is made by the means 80, the common part plus wild cards are provided on a line 84 to a means 86 for storing the associated phone numbers in a memory for later recall, either to allow addition of a phone number to the profile or to operate a select feature in response to a certain kind of input. Once the profile is established in the telecommunications terminal and stored in the memory 86, the user of the terminal can add a phone number to the profile by calling the profile by entering one or more key strokes for instance or by some other input methodology in order to call up the stored profile. The user would be presented with the common part along with the wild card symbol or symbols and would merely have to enter one or more additional digits in order to individualize the phone number to a particular party within for instance the company profile. This individualized phone number is then added to the company profile stored in the memory 86. The user can thereby build up a large set of phone numbers associated with a particular profile such as that of a company by merely entering a few digits instead of the entire telephone number for each individual. This greatly alleviates the amount of work that the user has to do to create such a profile.

Once the profile is established, the telecommunications terminal will then be responsive to a certain kind of input on the line 90 for calling the profile and causing a feature also associated with the profile to be operated as indicated by a signal on a line 92. The input on the line 90 might be the user calling the individual at the company profile or receiving a call from an individual within the company and operating a display to identify same. Therefore, it will be understood that the feature activated by the calling of the profile in response to the input on the line 92 may be any feature of the telecommunication terminal.

Although the invention has been shown and described with respect to a best mode embodiment thereof, it should be understood by those skilled in the art that the foregoing and various other changes, omissions and additions in the form and detail thereof may be made therein without departing from the spirit and scope of the invention.

## Claims

1. Method, for use in a mobile telephone having means for storing phone numbers, wherein said mobile telephone stores said phone numbers in a memory, said method comprising the steps of:
associating (1) selected phone numbers with a distinctive profile (3) generally indicative of a shared characteristic of the selected phone numbers, and
enabling (4) a feature of said mobile telephone for operation (9a) upon receiving an input (6) relating to one of said selected phone numbers.

2. The method of claim 1, wherein said shared characteristic comprises recently made or received phone calls and said feature comprises a distinctive alerting sound indicative of said shared characteristic, said input comprising receipt of a call from one of said phone numbers of recently made or received calls.

3. The method of claim 1, wherein said shared characteristic comprises said selected phone numbers having some shared numbers, said input comprising a user entering said phone numbers into said memory, and said feature comprising allowing said user to enter said phone numbers without having to enter said shared numbers.

4. Method, for use in a mobile telephone having means for storing phone numbers of recently made or received phone calls, wherein said mobile telephone stores said phone numbers of recently made or received phone calls in a memory having capacity dedicated for only a limited number of phone numbers of said recently made or received phone calls which are removed one or more at a time according to a selected capacity management methodology, said method comprising the steps of:
associating said stored phone numbers of recently made or received phone calls with a distinctive alerting sound generally indicative of recently made or received phone calls, and
sounding said distinctive alerting sound upon receiving a call from one of said phone numbers of recently made or received calls.

5. The method of claim 2 or 4, further comprising the step of preventing said step of associating, sounding or enabling in a case where said call received from one of said phone numbers of recently made or received calls matches a phone number prestored in said memory by a user.

6. The method of claims 1, 4 or 5, further comprising the step of sounding a distinctive alerting sound indicative of a particular party associated with said phone number prestored in said memory by said user; and/or
said distinctive alerting sound or profile is instead indicative of a particular party having an associated phone number selected and prestored in said memory by a user of said mobile telephone.

7. Method, for use in a mobile telephone that stores phone numbers of recently made or received phone calls in a memory having capacity dedicated for only a limited number of phone numbers which are removed one or more at a time according to a selected capacity management process, said method comprising the steps of:
comparing a phone number of an incoming phone call to said recently made or received phone numbers stored in said memory and upon finding a match,
sounding a distinctive alerting sound.

8. The method of claim 7, wherein said mobile telephone also stores phone numbers entered by a user, wherein said method further comprises the step of:
comparing said phone number of said incoming phone call to said stored phone numbers entered by said user and only sounding said distinctive alerting sound in the absence of a match.

9. The method of claim 7, wherein said distinctive alerting sound for recently made calls is distinct from recently received calls.

10. Method for use in a mobile telephone having means for storing phone numbers of recently made, received, or missed calls, wherein said mobile telephone stores said phone numbers of recently made, received, or missed calls in a memory having capacity dedicated for only a limited number of phone numbers of said recently made, received, or missed calls that are removed one or more at a time according to a memory management technique, said method comprising the steps of:
comparing a phone number of an incoming phone call to said phone numbers of recently made, received, or missed calls stored in said memory and also to phone numbers stored by a user, and
sounding a distinctive alerting sound generally indicative of recently made, received or missed calls upon said step of comparing yielding a match between said phone number of said incoming phone call and a phone number of a recently made, received, or missed call stored in said memory except upon said step of comparing also yielding a match between said phone number of said incoming phone call and a phone number stored by the user, in which case said distinctive alerting sound is indicative of a particular party having said phone number stored by the user.

11. The method of claims 1, 4 or 10, wherein said distinctive alerting sound or profile is separately generally indicative of recently made, received or missed calls with recently made calls, recently received calls, and recently missed calls having alerting sounds or profiles distinct from each other.

12. Method, for use in a mobile telephone having phone numbers stored by a user in groups in a memory with separate sequences of alerting tones associated by the user with each group, comprising the steps of:
defining a new group for storing a selected number of phone numbers of most recently made or received phone calls in a portion of said memory or in a separate memory having a storage capacity limited by a memory management process to storing a maximum of said selected number of phone numbers, and
alerting the user to a received phone call from a phone number presently stored in said portion of said memory or in said separate memory with a distinctive sequence of alerting tones associated with said new group.

13. The method of claim 12, wherein said step of alerting the user to a received phone call is made with a distinctive sequence of alerting tones associated with a group associated with a phone number already stored in said mobile telephone by said user and associated with said group rather than said new group.

14. The method of claim 12, wherein said new group also includes phone numbers of most recently missed phone calls.

15. Mobile telephone having means for storing phone numbers of recently made or received phone calls, wherein said mobile telephone stores said phone numbers of recently made or received phone calls in a memory having capacity dedicated for only a limited number of phone numbers of said recently made or received phone calls which are removed one or more at a time according to a selected capacity management methodology, said mobile telephone further comprising:
means for associating said stored phone numbers of recently made or received phone calls with a distinctive alerting sound generally indicative of recently made or received phone calls; and
means for sounding said distinctive alerting sound upon receiving a call from one of said phone numbers of recently made or received calls.

16. The mobile telephone of claim 15, further comprising means for preventing said step of associating or sounding in a case where said call received from one of said phone numbers of recently made or received calls matches a phone number prestored in said memory by a user.

17. The mobile telephone of claim 16, further comprising means for sounding a distinctive alerting sound indicative of a particular party associated with said phone number prestored in said memory by said user.

18. The mobile telephone of claim 15, wherein said distinctive alerting sound is instead indicative of a particular party having an associated phone number selected and prestored in said memory by a user of said mobile telephone; and/or
wherein said distinctive alerting sound is separately generally indicative of recently made, received or missed calls with recently made calls, recently received calls, and recently missed calls having alerting sounds distinct from each other.

19. Mobile telephone that stores phone numbers of recently made or received phone calls in a memory having capacity dedicated for only a limited number of phone numbers which are removed one or more at a time according to a selected capacity management process, said mobile telephone further comprising:
means for comparing a phone number of an incoming phone call to said recently made or received phone numbers stored in said memory; and
means for sounding a distinctive alerting sound upon finding a match.

20. The mobile telephone of claim 19, wherein said mobile telephone also stores phone numbers entered by a user, wherein said method further comprises:
means for comparing said phone number of said incoming phone call to said stored phone numbers entered by said user and only sounding said distinctive alerting sound in the absence of a match.

21. The mobile telephone of claim 19, wherein said distinctive alerting sound for recently made calls is distinct from that for recently received calls.

22. Mobile telephone having means for storing phone numbers of recently made, received, or missed calls, wherein said mobile telephone stores said phone numbers of recently made, received, or missed calls in a memory having capacity dedicated for only a limited number of phone numbers of said recently made, received, or missed calls that are removed one or more at a time according to a memory management technique, said mobile telephone comprising:
means for comparing a phone number of an incoming phone call to said phone numbers of recently made, received, or missed calls stored in said memory and also to phone numbers stored by a user; and
means for sounding a distinctive alerting sound generally indicative of recently made, received or missed calls upon said means for comparing yielding a match between said phone number of said incoming phone call and a phone number of a recently made, received, or missed call stored in said memory except upon said means for comparing also yielding a match between said phone number of said incoming phone call and a phone number stored by the user, in which case said distinctive alerting sound is indicative of a particular party having said phone number stored by the user.

23. The mobile telephone of claim 22, wherein said distinctive alerting sound is separately generally indicative of recently made, received or missed calls with recently made calls, recently received calls, and recently missed calls having alerting sounds distinct from each other.

24. Mobile telephone having phone numbers stored by a user in groups in a memory with separate sequences of alerting tones associated by the user with each group, comprising:
means for defining a new group for storing a selected number of phone numbers of most recently made or received phone calls in a portion of said memory or in a separate memory having a storage capacity limited by a memory management process to storing a maximum of said selected number of phone numbers; and
means for alerting the user to a received phone call from a phone number presently stored in said portion of said memory or in said separate memory with a distinctive sequence of alerting tones associated with said new group.

25. The mobile telephone of claim 24, wherein said means for alerting the user to a received phone call provides a distinctive sequence of alerting tones associated with a group associated with a phone number already stored in said mobile telephone by said user and associated with said group rather than said new group.

26. The mobile telephone of claim 24, wherein said new group also includes phone numbers of most recently missed phone calls.

27. Method for use in a telecommunications terminal, comprising the steps of
receiving a user input (82) associating a common part of a set of phone numbers with a distinctive profile, and
permitting said user to add (88) phone numbers to said set of phone numbers without wholly entering said common part.

28. The method of claim 27, wherein said user input associating a common part comprises entering said common part with one or more additional symbols indicating additional user input is required to add a noncommon part corresponding to said one or more additional symbols in adding numbers to said set.

29. The method of claim 27, wherein said user adds a number to said set of numbers with a distinctive profile by operating said distinctive profile and adding digits to said common part to designate a distinctive phone number.
